Europäisches Patentamt

European Patent Office

Office européen des brevets

(11) Publication number : **0 418 898 B1**

# EUROPEAN PATENT SPECIFICATION

(45) Date of publication of patent specification :
**30.11.94 Bulletin 94/48**

(51) Int. Cl.⁵ : **G01S 15/60**

(21) Application number : **90118140.4**

(22) Date of filing : **20.09.90**

(54) Ultrasonic doppler ground speedmeter.

(30) Priority : **22.09.89 JP 244998/89**

(43) Date of publication of application :
**27.03.91 Bulletin 91/13**

(45) Publication of the grant of the patent :
**30.11.94 Bulletin 94/48**

(84) Designated Contracting States :
**DE GB**

(56) References cited :
**FR-A- 2 354 565**
**GB-A- 2 191 647**

(73) Proprietor : **NISSAN MOTOR CO., LTD.**
**2 Takara-cho, Kanagawa-ku**
**Yokohama-shi Kanagawa-ken (JP)**

(72) Inventor : **Negishi, Masami**
**Shinkawa-cho 5-32-6-1005,**
**Minami-ku**
**Yokahama-shi, Kanagawa-ken (JP)**

(74) Representative : **Patentanwälte Grünecker,**
**Kinkeldey, Stockmair & Partner**
**Maximilianstrasse 58**
**D-80538 München (DE)**

## Description

### RELATED APPLICATION

This application is related to our prior copending application for U.S. Pat. entitled "ULTRASONIC GROUND SPEEDMETER UTILIZING DOPPLER EFFECT" which was filed on April 24, 1990 and which bears Ser. No. 513658 or for Europe Pat. entitled "the same" which was filed on April 25, 1990 and which bears Appli. No. 90107838-6.

### BACKGROUND OF THE INVENTION

#### Field of the Invention

The present invention relates to an ultrasonic Doppler ground speedmeter, and more specifically to an improvement of an ultrasonic Doppler ground speedmeter in circuit configuration for providing a smaller size and a lower cost.

#### Description of the Prior Art

An example of prior-art ultrasonic Doppler ground speedmeter is disclosed in Japanese Published Unexamined (Kokai) Patent Appli. No. 60-76678. In the prior-art ground speedmeter, an ultrasonic wave signal having a predetermined frequency $f_o$ is transmitted to a road surface; an ultrasonic wave signal returned being diffusion reflected from the road surface is received; and a ground speed can be calculated on the basis of a change in frequency between the two ultrasonic wave signals due to Doppler effect, that is, Doppler shift frequency $f_d$ can be expressed as

$$f_d = 2f_o \cdot v \cos\theta/C \quad (1)$$

where $f_o$ denotes the transmission signal frequency; C denotes the sound speed; v denotes a speed of an object to be measured, for instance, such as an automotive vehicle; and $\theta$ denotes a transmission angle of the ultrasonic wave signal to a road surface. Therefore, it is possible to calculated a vehicle speed v by deriving a Doppler shift frequency $f_d$. However, the above expression (1) is effective only when an ultrasonic signal is received in the vehicle travelling direction.

In the above expression (1), since the sound speed is 340 m/s (corresponding to 1224 km/h), the Doppler shift frequency $f_d$ increases proportionally with increasing vehicle speed v.

For instance, if a range of vehicle speed to be detected is from 0 to 200 km/h (at the maximum speed), the Doppler shift frequency $f_d$ ranges from 0 (at 0 km/h vehicle speed) to about $0.23 f_o$ (at 200 km/h vehicle speed) when the ultrasonic signal transmission angle $\theta$ to the road surface is 45 degrees. Therefore, if $f_d$ at the maximum vehicle speed is $f_{d \, max}$, the frequency of the ultrasonic signal received by a receiver changes within a range from $f_o$ to $f_o + f_{d \, max}$ according to vehicle speed. For instance, if the frequency of the transmitted ultrasonic signal is 120 kHz in the above example, the Doppler shift frequency $f_d$ changes from 0 to 27.6 kHz, so that the frequency of the received ultrasonic signal changes within a range from 120 to 147.6 kHz according to the vehicle speed.

On the other hand, in the ultrasonic Doppler vehicle ground speedmeter to be mounted on a vehicle, piezo-electric transmitter and receiver are preferably used as means for transmitting and receiving ultrasonic signals. However, since the transmitter and receiver are mounted under such a severe environment as under the vehicle floor in practice, the transmitter and receiver must be of an enclosed structure. An enclosed-structure transmitter or receiver forms a resonance system on the basis of the shape and dimensions thereof and the sound pressure level or sensitivity is the highest at the resonance frequency.

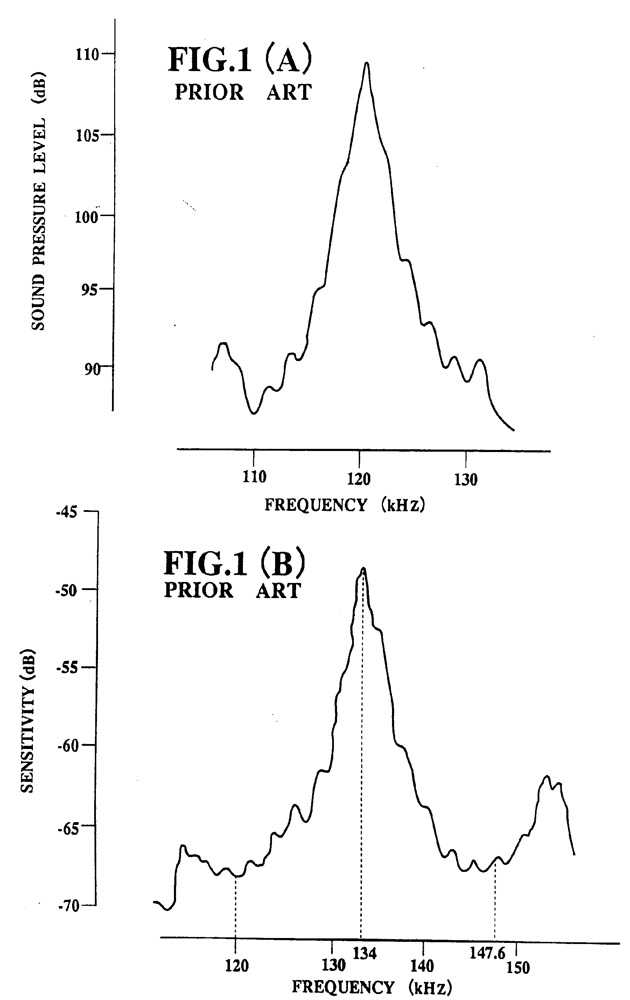

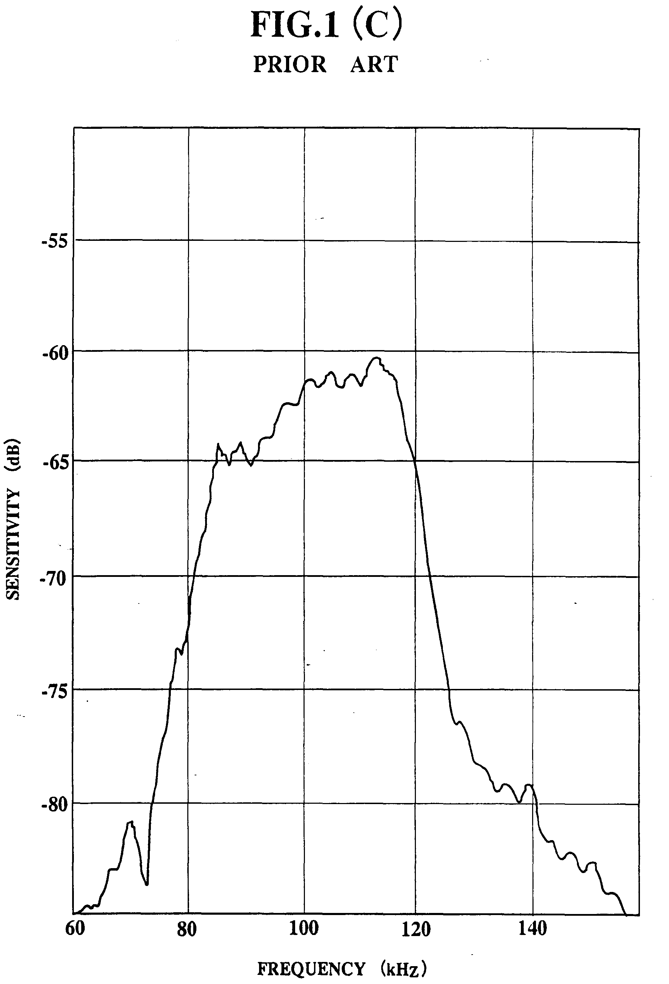

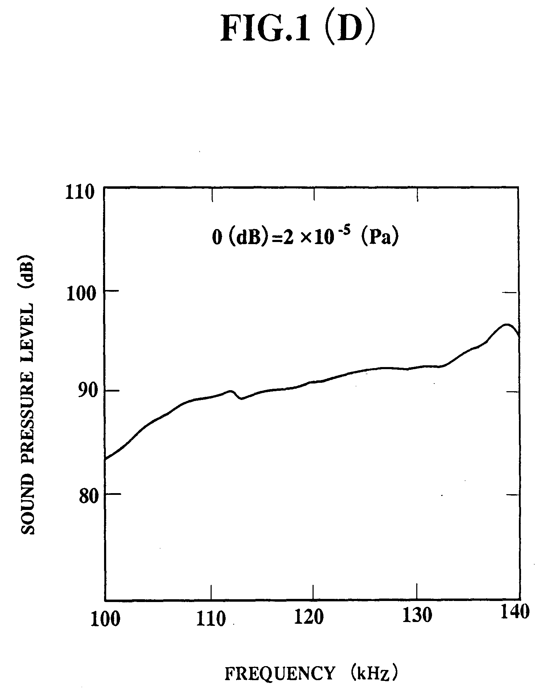

Fig. 1(A) shows sensitivity characteristics of a resonance piezo-electric transmitter, by way of example. In this example, the sound pressure level is as high as about 110 dB at a resonance frequency of 120 kHz but the sound pressure level drops sharply when the frequency deviates from the resonance frequency.

As described above, since the ultrasonic wave signal frequency for the ultrasonic Doppler vehicle ground speedmeter changes from a transmission frequency $f_o$ to a value derived by adding or subtracting a Doppler shift frequency $f_{d \, max}$ corresponding to the maximum vehicle speed to or from $f_o$, it is preferable that the characteristics of the receiver have a high reception sensitivity within the above-mentioned frequency range. However, as is well understood in Fig. 1(A), since the transmitter has a high sound pressure level at only the resonance frequency, if the frequency deviates from the resonance point, the characteristics are such that the sound pressure level drops sharply. Therefore, even if the transmission frequency $f_o$ is so determined as to match the resonance frequency or to obtain the peak sensitivity of the resonance microphone, since the high sensitivity frequency band of the receiver is narrow in comparison with a range from the transmission frequency $f_o$ to the Doppler shift frequency $f_d$, it is impossible to expect a high sensitivity over a wide frequency range from $f_o$ to $f_o \pm f_{d \, max}$, thus raising a problem in that the S/N ratio drops and therefore the measurement precision is low at the low sensitivity range of the receiver.

In more detail, since the frequency of the ultrasonic wave signal received by the receiver changes within a range from $f_o$ to $f_o \pm f_{d \, max}$, when the resonance frequency of the receiver is set to $f_o \pm f_{d \, max}/2$, it is possible to utilize the highest sensitivity range of the receiver.

Fig. 1(B) shows sensitivity characteristics of a resonance piezo-electric microphone having a resonance frequency of 134 kHz, by way of example. Where a piezo-electric microphone provided with the characteristics as shown in Fig. 1(B) is used as the receiver under the same condition as mentioned before (the transmission frequency is 120 kHz; the vehicle speed range for measurement is 0 to 200 km/h; and the transmission angle to the ground is 45 degrees), the frequency to be received by the receiver changes from 120 kHz (at 0 km/h vehicle speed) to 147.6 kHz (at 200 km/h vehicle speed) and the central value in the vehicle speed range for measurement is about 134 kHz (at 100 km/h vehicle speed). In this case, therefore, the resonance frequency point is the central value of the vehicle speed range for measurement and a highest sensitivity of about -48 dB can be obtained at the resonance point, which is the most preferable frequency setting under due consideration of the receiver characteristics. In this case, however, since the high sensitivity range of the receiver is narrow, the sensitivity of the vehicle speed measurement drops markedly down to -65 dB or less at both ends of the vehicle speed range, that is, when the vehicle speed is 0 km/h or 200 km/h (at the maximum).

When the reception sensitivity is low as described above, the S/N ratio of the Doppler signal drops and therefore the precision of vehicle ground speed measurement is also lowered.

Further, there exists a certain microphone provided with such characteristics that the sensitivity is flat to widen the high sensitivity range by depressing the resonance sensitivity as shown in Fig. 1(C). In this microphone, however, since the sensitivity at the resonance point is depressed into flat characteristics, the sensitivity is low over a wide frequency range and therefore it is impossible to improve the S/N ratio over the wide range by using a microphone having the characteristics as shown in Fig. 1(C).

As described above, in the prior-art vehicle ground speed meter, there exists a problem in that it is difficult to improve the measurement precision over the wide vehicle speed range to be measured.

## SUMMARY OF THE INVENTION

To solve the above-mentioned problem, the same applicant has already filed an ultrasonic Doppler ground speedmeter which can realize a higher S/N ratio and a higher measurement precision by controlling the frequency of the transmission signal so that the frequency of the reception signal may always match the resonance point of the receiver, that is, by controlling the transmission signal frequency $f_o$ so that $f_o \pm f_d$ becomes a predetermined value in spite of the fact that the Doppler shift frequency $f_d$ changes according to change in the vehicle ground speed as stated under RELATED APPLICATION. The above-mentioned related application has already proposed a basic conception of the ultrasonic Doppler ground speedmeter according to the present invention.

The object of the present invention is to provide an ultrasonic Doppler ground speedmeter easy to be realized by IC chip devices now put on the market and therefore small in size and low in cost, by further improving the circuit configuration of the speedmeter already proposed.

To achieve the above-mentioned object, the ultrasonic Doppler ground speedmeter according to the present invention comprises: (a) ultrasonic transmitting means (2) for transmitting an ultrasonic wave signal at a predetermined angle onto a road surface; (b) ultrasonic receiving means (5) for receiving an ultrasonic wave signal reflected from the road surface, the reflected ultrasonic wave signal frequency ($f_R$) being represented by a sum of the transmitted ultrasonic wave signal frequency ($f_T$) and a Doppler shift ($f_D$); (c) reference signal generating means (7) for generating a reference signal with a constant frequency ($f_{REF}$); (d) phase comparing means (8) responsive to the reflected ultrasonic wave signal and the reference signal, for generating a difference voltage signal according to difference ($f_{REF}$-$f_R$) in frequency and/or phase between the reflected signal and the reference signal; (e) voltage controlled oscillating means (11) responsive to the difference voltage signal, for generating the ultrasonic wave signal transmitted by said ultrasonic transmitting means in such a manner as to keep the reflected ultrasonic wave signal frequency ($f_R$) at the reference signal frequency ($f_{REF}$); and (f) arithmetic means (14) responsive to the transmitted ultrasonic wave signal and the reference signal, for deriving ground speed (v) from Doppler shift ($f_D$) between the transmitted ultrasonic wave signal frequency ($f_T$) and the received ultrasonic wave signal frequency ($f_R$) or the reference signal frequency ($f_{REF} = f_R$). The speedmeter further comprises: low-pass filter means (9) connected between said phase comparing means (8) and said voltage controlled oscillating means (11), for passing only low-frequency components of the reflected ultrasonic wave signal; driver means (1) connected between said ultrasonic transmitting means (2) and said voltage controlled oscillating means (11), for amplifying the transmitted ultrasonic wave signal; and preamplifier means (6) connected between said ultrasonic receiving means (5) and said phase comparing means (8), for amplifying the received ultrasonic wave signal.

Further, said reference signal generating means (7); a phase locked loop circuit composed of said phase comparing means (8), said low-pass filter means (9) and said voltage controlled oscillating means (11); said driver means (1); and said preamplifier means (6) can be all configured by separate IC chips now widely used, thus allowing the ultrasonic speedmeter to be small in size and low in cost.

In the speedmeter according to the present invention, the frequency $f_T$ of the voltage controlled oscillating means is so controlled that both the input signals $f_R$ and $f_{REF}$ applied to the phase comparating means became equal to each other in frequency on the basis of the principle of the PLL circuit.

That is, the frequency $f_T$ of the transmitted ultrasonic wave signal is automatically controlled so that the frequency $f_R$ of the received ultrasonic wave signal including a Doppler shift component $f_D$ according to vehicle speed always match that $f_{REF}$ of the reference signal.

Therefore, where the frequency $f_{REF}$ of the reference signal is determined to match the resonance point of the receiver, since the reception signal can be received at the highest sensitivity point of the receiver, it is possible to always obtain a high level reception signal irrespective of vehicle speed, thus realizing a higher S/N ratio and a higher measurement precision.

In the speedmeter of the present invention additionally, since the circuit is formed by using an ultrasonic wave path as a part of the feedback loop of the so-called PLL circuit, it is possible to configure the essential part of the present invention (for controlling the ultrasonic wave transmission signal so that the ultrasonic reception signal is kept at a predetermined frequency) by using IC chips for a PLL circuit now on the market, it is possible to realize an ultrasonic Doppler vehicle ground speedmeter excellent in detection precision all over the vehicle speed range for measurement, easy to be fabricated by IC chips, and therefore low in cost.

## BRIEF DESCRIPTION OF THE DRAWINGS

Fig. 1(A) is a graphical representation showing the frequency-sound pressure level characteristics of a prior-art piezo-electric transmitter;
Fig. 1(B) is a graphical representation showing the sensitivity characteristics of a prior-art piezo-electric receiver;
Fig. 1(C) is a graphical representation showing the similar characteristics of another prior-art piezo-electric receiver;
Fig. 1(D) is a graphical representation showing the similar characteristics of the other prior-art piezo-electric transmitter;
Fig. 2 is a schematic block diagram showing an embodiment of the ultrasonic Doppler ground speedmeter according to the present invention; and
Fig. 3 is a practical circuit diagram showing the embodiment shown in Fig. 2.

## DETAILED DESCRIPTION OF THE PREFERRED EMBODIMENTS

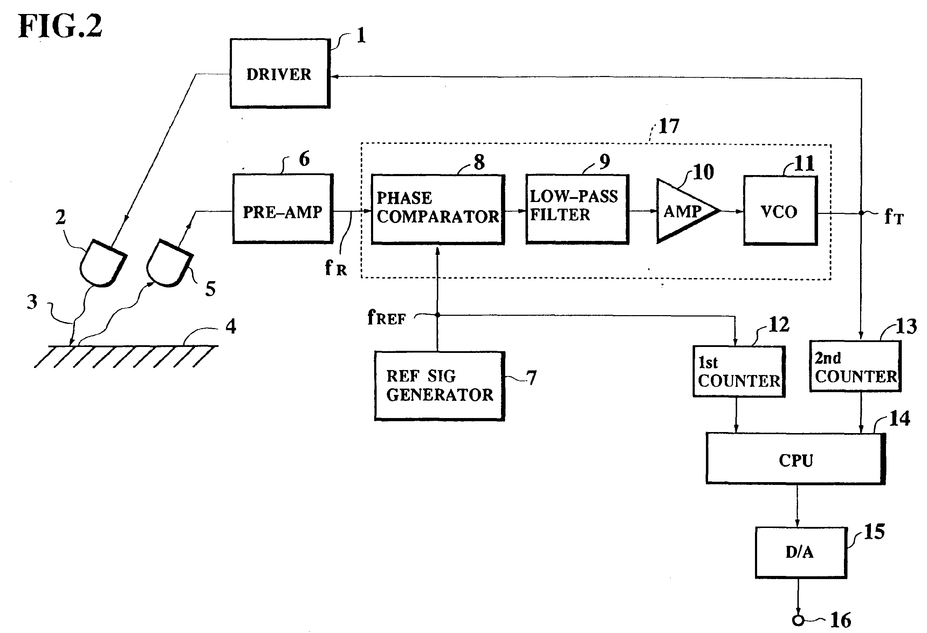

An embodiment of the ultrasonic Doppler ground speedmeter according to the present invention will be described hereinbelow with reference to the attached drawings. In Fig. 2, the speedmeter of the present invention comprises an ultrasonic signal transmitter 2, a transmitter driver 1, an ultrasonic signal receiver 5, an ultrasonic reception signal pre-amplifier 6, an PLL (phase locked loop) circuit 17 composed of a phase comparator 8, a low-pass filter 9, an amplifier 10, and a VCO circuit (voltage-controlled oscillator) 11, a reference signal generator 7, two counters 12 and 13, a CPU (arithmetic unit) 14, a D/A (digital-to-analog) convertor 15. The PLL circuit 17 is a stable oscillator which can generate any given frequency signals from a VCO circuit in response to a difference in phase between an output signal $f_R$ of the VCO 11 (the ultrasonic signal received by the receiver 5) and a reference signal $f_{REF}$ of the reference signal generator 7.

The operation of the circuit shown in Fig. 2 will be described hereinbelow.

In Fig. 2, the drive circuit 1 amplifies a signal (described later in detail) with a frequency $f_T$ outputted from the voltage controlled oscillator 11 and drives the transmitter 2 by an output signal thereof. The transmitter 2 of piezo-electric type, for instance generates and transmits an ultrasonic wave signal 3 with the frequency $f_T$ toward a road surface 4 in front (or back) of a vehicle, for instance at a predetermined transmission angle. On the other hand, the receiver 5 receives a reflection signal obtained when the ultrasonic wave signal 3 is diffusion reflected from the road surface 4.

The transmitter 2 is a transducer provided with a low transduction efficiency but a flat sound pressure level within a relatively wide frequency range from 100 to 130 kHz, for instance as shown in Fig. 1(D). The receiver 5 is a resonance microphone provided with a high resonance quality factor Q and a peak sensitivity near 130 kHz, for instance as shown in Fig. 1(B).

Since the frequency $f_R$ of the reflection signal is shifted due to Doppler effect according to vehicle speed, this frequency $f_R$ is determined to be higher than that $f_T$ of the transmission signal (when transmitted in the vehicle travelling direction). The preamplifier 6 amplifies the reception signal and sends it to the phase comparator 8.

The reflection signal with the frequency $f_R$ outputted from the preamplifier 6 and a reference signal with the frequency $f_{REF}$ outputted from the reference signal generator 7 are given to the phase comparator 8 as two input signals. The phase comparator 8 outputs a difference voltage signal according to difference in frequency and/or phase between the two input signals. The low-pass filter 9 outputs low-frequency components of the difference voltage signal. The difference voltage signal including only low-frequency components is amplified by the amplifier 10 and then applied to the voltage-controlled oscillator 11. Therefore, the voltage-controlled oscillator 11 outputs a signal having a frequency $f_T$ controlled according to the difference voltage signal, in order to drive the transmitter 2 via the drive circuit 1.

On the other hand, the output of the reference signal generator 7 is counted by the first counter 12 and the output of the voltage-controlled oscillator 11 is counted by the second counter 13, respectively to obtain two counted frequency values $f_{REF}$ and $f_T$. These two digital counted values are calculated by the CPU 14 to derive a vehicle speed v in accordance with the following formula:

$$v = \frac{(f_{REF} - f_T)\, C}{(f_{REF} + f_T)\cos\theta} \quad (2)$$

where C denotes the sound speed and $\theta$ denotes the transmission angle of the ultrasonic wave signal with respect to the road surface.

The digital vehicle speed v derived by the above calculation is converted into an analog signal via the D/A converter 15 to obtain an analog voltage corresponding to the vehicle speed. This analog voltage is outputted through an output terminal 16.

In the circuit shown in Fig. 2, the PLL (phase locked loop) circuit including an ultrasonic wave signal path as a feedback loop is composed of the drive circuit 1, the transmitter 2, the receiver 5, the preamplifier 6, the reference signal generator 7, the phase comparator 8, the low-pass filter 9, the amplifier 10 and the voltage-controlled oscillator 11. In this PLL circuit, the frequency of the output signal of the voltage-controlled oscillator 11 is so controlled that the two input signals to the phase comparator 8 are equalized to each other in frequency. Therefore, in the circuit shown in Fig. 2, the frequency $f_T$ of the output signal of the voltage-controlled oscillator 11 is so controlled that the frequency $f_R$ of the reception signal including a Doppler shift component becomes equal to that $f_{REF}$ of the reference signal. That is, when an ultrasonic wave signal is transmitted in the vehicle travelling directive, since $f_R$ becomes higher than $f_T$ due to a Doppler shift corresponding to the vehicle speed and further $f_R$ is controlled so as to become equal to a constant reference frequency $f_{REF}$, $f_R$ is kept constant and $f_T$ becomes smaller due to a Doppler shift corresponding to vehicle speed.

That is, the following formula can be obtained

$$f_{REF} = f_R = f_T + f_D \quad (3)$$

where $f_D$ denotes the Doppler shift component.

Therefore, it is possible to obtain a vehicle speed on the basis of $f_{REF}$ and $f_T$ in accordance with the formula (2).

For instance, if the vehicle speed is 0 km/h, since $f_D = 0$

$$f_{REF} = f_R = f_{T_0}$$

where $f_{T_0}$ denotes $f_T$ at 0-km/h vehicle speed.

Since $f_D$ increases with increasing vehicle speed,

$$f_T = f_{T_0} - f_D$$

can be obtained from the formula (3), so that the oscillation frequency $f_T$ of the voltage controlled oscillator 11 is automatically adjusted so as to decrease due to the Doppler shift $f_D$ corresponding to the vehicle speed.

In the present invention, as described above, since the frequency $f_T$ of the transmission signal can be always adjusted automatically so that the reception frequency $f_R$ may match that $f_{REF}$ of the reference signal, it is possible to use a resonance microphone having a high resonance quality factor Q as shown in Fig. 1(B) and further set the frequency $f_{REF}$ of the reference signal to the resonance frequency (e.g. 130 kHz) of the microphone, thus obtaining a high level reception signal at all times, irrespective of vehicle speed.

In addition, when a microphone having as high a resonance quality factor as possible is used as the receiver, since a filter function for removing signals other than the Doppler shift frequency component can be provided for the circuit in cooperation with the directional characteristics of the transmitter and the receiver, it is possible to obtain a Doppler signal with a higher S/N ratio.

Further, as already explained, since the frequency $f_T$ of the transmission signal changes as $f_T = f_{T_0} - f_D$ according to vehicle speed, it is necessary for the transmitter to transmit signals with frequencies ranging from 20 to 30 kHz. For instance, when the frequency of the reception signal is set to 130 kHz, the transmitter must transmit signals with frequencies ranging from 100 to 130 kHz. In order to output signals of a wide band as described above, a transmitter provided with a low transduction efficiency but a wide frequency band as shown in Fig. 1(D) is used. In this case, an ultrasonic wave signal of sufficient sound pressure can be transmitted by driving the transmitter by a relatively high power to compensate for the low transduction efficiency. Further, when a transmitter of narrow band as shown in Fig. 1(A) is used, a drive circuit which can change the voltage level of the drive signal according to the frequency characteristics is incorporated (e.g. an amplifier having characteristics opposite to those shown in Fig. 1(A).

Further, it is also possible to obtain a more stable operation by setting the transfer characteristics of the low-pass filter 9 in the PLL circuit 17 so as to correspond to the kinetic characteristics of the vehicle (e.g. under due consideration of vehicle vibration characteristics).

Further, in the present embodiment, there exists such an advantage that no fine adjustment is required for the circuit because the circuit functions as a closed loop including an ultrasonic wave signal path and therefore an automatic adjusting function is provided for the speedmeter circuit.

Further, in the present embodiment, it is also possible to discriminate the vehicle travelling direction on the basis of the relationship between $f_{REF}$ and $f_T$. For instance, on the assumption that an ultrasonic wave is transmitted in the vehicle travelling direction, if $f_{REF}$ > $f_T$, this indicates a forward vehicle travelling; and if $f_{REF}$ < $f_T$, this indicates a reverse vehicle travelling.

The present embodiment has the following advantages from the practical standpoint. That is, in the present invention, since the circuit is so configured that an ultrasonic signal path is formed as a part of the feedback loop of the PLL circuit, the essential portion of the circuit for controlling the ultrasonic wave transmission signal $f_T$ to a constant frequency $f_{REF}$ can be configured by IC chips of the PLL circuit now on the market. For instance, the block 17 enclosed by dashed line in Fig. 2 is an IC chip now put on the market as a PLL circuit. Therefore, it is possible to realize an ultrasonic wave Doppler ground vehicle speedmeter easy to be configured by IC chips relatively low in cost.

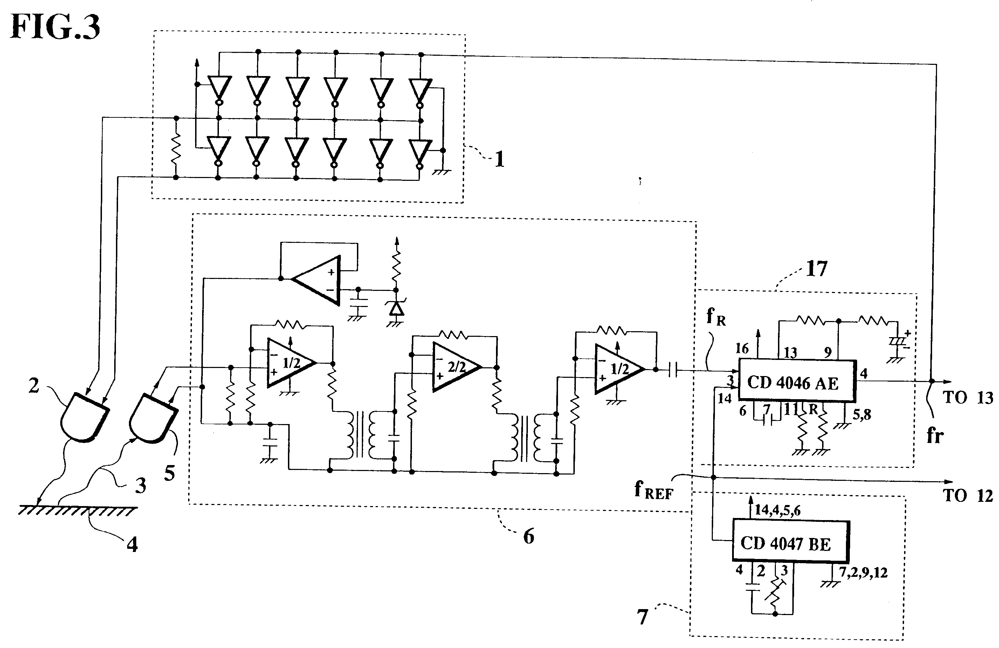

Fig. 3 shows a practical circuit corresponding to the circuit shown in Fig. 2 by use of IC chips now on sale, in which the same reference numerals have been retained for similar parts which have the same functions. Further, in Fig. 3, the counters 12 and 13, the CPU 14 and the D/A convertor 15 are all omitted therein.

In Fig. 3, the PLL circuit 17 is a general purpose CMOS chip (e.g. CD4046 AE made by RCA) now put on the market for a radio set. In the same way, the reference signal generator 7 is a general purpose IC chip (e.g. CD4047 BE made by RCA). Further, the preamplifier 6 is configured by a band-pass filter composed of three general purpose FET-input calculating amplifiers (operational amplifies) and two intermediate frequency transformers (IFT), and the drive circuit 1 is a CMOS inverter group (e.g. CD4069 BUE made by RCA) widely used as logic circuits. As described above, in the circuit according to the present invention, since the circuit can be configured by IC chips now on the market, it is possible to reduce the number of composing elements and therefore the size and the cost thereof markedly.

As described above, according to the present invention, since the frequency of the ultrasonic wave reception signal is so automatically controlled as to match that of the reference signal, it is possible to always receive the reflected signal at the highest sensitivity point of the receiver and therefore to obtain the reception signal of a higher signal level irrespective of vehicle speed, so that it is possible to realize a higher detection precision and a higher S/N ratio. Further, since an ultrasonic wave signal path is formed as a part of the feedback loop of the so-called PLL circuit, it is possible to configure the essential elements of the circuit according to the present invention for controlling the ultrasonic wave transmission signal so that the ultrasonic reception signal has always a predetermined frequency by IC chips for the PLL circuit now widely on sale. Therefore, it is possible to realize an ultrasonic Doppler ground speedmeter fabricatable by IC chips and therefore small in size and low in cost.

## Claims

1. An ultrasonic Doppler ground speedmeter, comprising:

    (a) ultrasonic transmitting means (2) for transmitting an ultrasonic wave signal at a predetermined angle onto a road surface;
    (b) ultrasonic receiving means (5) for receiving an ultrasonic wave signal reflected from the road surface, the reflected ultrasonic wave signal frequency ($f_R$) being represented by a sum of the transmitted ultrasonic wave signal frequency ($f_T$) and a Doppler shift ($f_D$);
    (c) reference signal generating means (7) for generating a reference signal with a constant frequency ($f_{REF}$);
    (d) phase comparing means (8) responsive to the reflected ultrasonic wave signal and the reference signal, for generating a difference voltage signal according to difference ($f_{REF}$-$f_R$) in frequency and/or phase between the reflected signal and the reference signal; and
    (e) arithmetic means (14) responsive to the transmitted ultrasonic wave signal and the reference signal, for deriving ground speed (v) from Doppler shift ($f_D$) between the transmitted ultrasonic wave signal frequency ($f_T$) and the received ultrasonic wave signal frequency ($f_R$) or the reference signal frequency ($f_{REF}$ = $f_R$);

        characterised in that it further comprises

    (f) voltage controlled oscillating means (11) responsive to the difference voltage signal, for generating the ultrasonic wave signal transmitted by said ultrasonic transmitting means in such a manner as to keep the reflected ultrasonic wave signal frequency ($f_R$) at the reference signal frequency ($f_{REF}$).

2. The ultrasonic Doppler ground speedmeter of claim 1, which further comprises low-pass filter means (9) connected between said phase comparing means (8) and said voltage controlled oscillating means (11), for passing only low-frequency components of the reflected ultrasonic wave signal.

3. The ultrasonic Doppler ground speedmeter of claim 2, which further comprises driver means (1) connected between said ultrasonic transmitting means (2) and said voltage controlled oscillating means (11), for amplifying the transmitted ultrasonic wave signal.

4. The ultrasonic Doppler ground speedmeter of claim 3, which further comprises preamplifier means (6) connected between said ultrasonic receiving means (5) and said phase comparing means (8), for amplifying the received ultrasonic wave signal.

5. The ultrasonic Doppler ground speedmeter of claim 1, wherein said reference signal generating means (7) is formed into a single integrated circuit chip.

6. The ultrasonic Doppler ground speedmeter of claim 2, wherein said phase comparing means (8), said low-pass filter means (9) and said voltage controlled oscillating means (11) are all formed into a single integrated circuit chip together.

7. The ultrasonic Doppler ground speedmeter of claim 3, wherein said driver means (1) is formed into a single integrated circuit chip.

8. The ultrasonic Doppler ground speedmeter of claim 4, wherein said preamplifier means (6) is formed into a single integrated circuit chip.

**Patentansprüche**

1. Doppler-Ultraschallmeßgerät zur Bestimmung der Bodengeschwindigkeit, mit:
   a) einer Ultraschall-Sendeeinrichtung (2) zum Senden eines Ultraschallwellensignals auf eine Fahrbahnoberfläche unter einem vorbestimmten Winkel;
   b) einer Ultraschall-Empfangseinrichtung (5) zum Empfang eines von der Fahrbahnoberfläche reflektierten Ultraschallwellensignals, wobei die Frequenz ($f_R$) des reflektierten Ultraschallwellensignals aus einer Summe der Frequenz ($f_T$) des gesendeten Ultraschallwellensignals und einer Dopplerverschiebung ($f_D$) gebildet wird;
   c) einem Referenzsignalgenerator (7) zur Erzeugung eines Referenzsignals mit einer konstanten Frequenz ($f_{REF}$);
   d) einem Phasenkomparator (8) zur Erzeugung eines der Frequenzdifferenz ($f_{REF}$-$f_R$) und/oder Phasendifferenz zwischen dem reflektierten Signal und dem Referenzsignal entsprechenden Differenzsignals in Abhängigkeit des reflektierten Ultraschallwellensignals und des Referenzsignals; und
   e) einer Recheneinrichtung (14) zur Ermittlung der Bodengeschwindigkeit (v) aus der Dopplerverschiebung ($f_D$) zwischen der Frequenz ($f_T$) des gesendeten Ultraschallwellensignals und der Frequenz ($f_R$) des empfangenen Ultraschallwellensignals oder der Referenzsignalfrequenz ($f_{REF}$ = $f_R$) in Abhängigkeit des gesendeten Ultraschallwellensignals und des Referenzsignals; **gekennzeichnet durch**
   f) einen spannungsgesteuerten Oszillator (11) zur Erzeugung des von der Ultraschall-Sendeeinrichtung gesendeten Ultraschallwellensignals in Abhängigkeit des Differenzsignals in der Weise, daß die Frequenz ($f_R$) des reflektierten Ultraschallwellensignals bei der Referenzsignalfrequenz ($f_{REF}$) gehalten wird.

2. Doppler-Ultraschallmeßgerät nach Anspruch 1, **gekennzeichnet durch** ein zwischen den Phasenkomparator (8) und den spannungsgesteuerten Oszillator (11) geschaltetes Tiefpaßfilter (9), welches nur niederfrequente Komponenten des reflektierten Ultraschallwellensignals durchläßt.

3. Doppler-Ultraschallmeßgerät nach Anspruch 2, **gekennzeichnet durch** eine zwischen die Ultraschall-Sendeeinrichtung (2) und den spannungsgesteuerten Oszillator (11) geschaltete Treibereinrichtung (1) zur Verstärkung des zu sendenden Ultraschallwellensignals.

4. Doppler-Ultraschallmeßgerät nach Anspruch 3, **gekennzeichnet durch** einen zwischen die Ultraschall-Empfangseinrichtung (5) und den Phasenkomparator (8) geschalteten Vorverstärker (6) zur Verstärkung des empfangenen Ultraschallwellensignals.

5. Doppler-Ultraschallmeßgerät nach Anspruch 1, **dadurch gekennzeichnet**, daß der Referenzsignalgenerator (7) in einem einzelnen integrierten Schaltkreis untergebracht ist.

6. Doppler-Ultraschallmeßgerät nach Anspruch 2, **dadurch gekennzeichnet**, daß der Phasenkomparator (8), das Tiefpaßfilter (9) und der spannungsgesteuerte Oszillator (11) alle zusammen in einem einzelnen integrierten Schaltkreis untergebracht sind.

7. Doppler-Ultraschallmeßgerät nach Anspruch 3, **dadurch gekennzeichnet**, daß die Treibereinrichtung (1) in einem einzelnen integrierten Schaltkreis untergebracht ist.

8. Doppler-Ultraschallmeßgerät nach Anspruch 4, **dadurch gekennzeichnet,** daß der Vorverstärker (6) in einem einzelnen integrierten Schaltkreis untergebracht ist.

## Revendications

1. Vélocimètre de défilement de sol à ultrasons et effet Doppler, comprenant :

   (a) un moyen de transmission à ultrasons (2) pour transmettre un signal d'onde à ultrasons à un angle prédéterminé sur une surface de route ;

   (b) un moyen de réception à ultrasons (5) pour recevoir un signal d'onde à ultrasons réfléchi à partir de la surface d'une route, la fréquence du signal d'onde à ultrasons réfléchi ($f_R$) étant représentée par une somme de la fréquence du signal d'onde à ultrasons transmis ($f_T$) et d'un déplacement Doppler ($f_D$) ;

   (c) un moyen générateur de signaux de référence (7) pour générer un signal de référence avec une fréquence constante ($f_{REF}$) ;

   (d) un moyen de comparaison de phase (8) sensible au signal d'onde à ultrasons réfléchi et au signal de référence, pour générer un signal de tension de différence selon la différence ($f_{REF}-f_R$) de fréquence et/ou de phase entre le signal réfléchi et le signal de référence ; et

   (e) un moyen arithmétique (14) sensible au signal d'onde à ultrasons transmis et au signal de référence, pour obtenir la vitesse de défilement de sol (v) à partir du déplacement Doppler ($f_D$) entre la fréquence du signal d'onde à ultrasons transmis ($f_T$) et la fréquence du signal d'onde à ultrasons reçu ($f_R$) ou la fréquence du signal de référence ($f_{REF} = f_R$) ; caractérisé en ce qu'il comprend en outre

   (f) un moyen d'oscillation commandé par tension (11) sensible au signal de tension de différence, pour générer le signal d'onde à ultrasons transmis par ledit moyen de transmission à ultrasons de manière à conserver la fréquence du signal d'onde à ultrasons réfléchi ($f_R$) à la fréquence du signal de référence ($f_{REF}$).

2. Le vélocimètre de défilement de sol à ultrasons et effet Doppler selon la revendication 1, qui comprend en outre un moyen de filtre passe-bas (9) relié entre ledit moyen de comparaison de phase (8) et ledit moyen d'oscillation commandé par tension (11), pour passer uniquement les composants basse fréquence du signal d'onde à ultrasons réfléchi.

3. Le vélocimètre de défilement de sol à ultrasons et effet Doppler selon la revendication 2, qui comprend en outre un moyen d'entraînement (1) relié entre ledit moyen de transmission à ultrasons (2) et ledit moyen d'oscillation commandé par tension (11), pour amplifier le signal d'onde à ultrasons transmis.

4. Le vélocimètre de défilement de sol à ultrasons et effet Doppler selon la revendication 3, qui comprend en outre un moyen préamplificateur (6) relié entre ledit moyen de réception à ultrasons (5) et ledit moyen de comparaison de phase (8), pour amplifier le signal d'onde à ultrasons reçu.

5. Le vélocimètre de défilement de sol à ultrasons et effet Doppler selon la revendication 1, où ledit moyen générateur de signaux de référence (7) est formé dans une seule puce de circuit intégré.

6. Le vélocimètre de défilement de sol à ultrasons et effet Doppler selon la revendication 2, où ledit moyen de comparaison de phase (8), ledit moyen de filtre passe-bas (9) et ledit moyen d'oscillation commandé par tension (11) sont tous ensemble formés dans une seule puce de circuit intégré.

7. Le vélocimètre de défilement de sol à ultrasons et effet Doppler selon la revendication 3, où ledit moyen d'entraînement (1) est formé dans une seule puce de circuit intégré.

8. Le vélocimètre de défilement de sol à ultrasons et effet Doppler selon la revendication 4, où ledit moyen préamplificateur (6) est formé dans une seule puce à circuit intégré.

FIG.1 (A)
PRIOR ART

FIG.1 (B)
PRIOR ART

9

# FIG.1 (C)
## PRIOR ART

SENSITIVITY (dB) vs FREQUENCY (kHz)

10

# FIG.1 (D)

$$0\ (dB) = 2 \times 10^{-5}\ (Pa)$$

SOUND PRESSURE LEVEL (dB)

110

100

90

80

100    110    120    130    140

FREQUENCY (kHz)

# FIG.2

FIG.3

CD 4047 BE

CD 4046 AE

$f_{REF}$

$f_R$

$f_r$

TO 12

TO 13